Europäisches Patentamt

European Patent Office

Office européen des brevets

(19)

(11) Numéro de publication: **0 222 652 B1**

# FASCICULE DE BREVET EUROPEEN

(12)

(45) Date de publication du fascicule du brevet:
31.01.90

(51) Int. Cl.⁴: **G01L 5/22**, G01L 5/16

(21) Numéro de dépôt: **86402335.3**

(22) Date de dépôt: **17.10.86**

(54) **Capteur de mesure d'efforts et de couples et applications d'un tel capteur à un palpeur et à un dispositif de préhension.**

(30) Priorité: **25.10.85 FR 8515886**

(43) Date de publication de la demande:
**20.05.87 Bulletin 87/21**

(45) Mention de la délivrance du brevet:
**31.01.90 Bulletin 90/5**

(84) Etats contractants désignés:
**BE DE GB IT SE**

(56) Documents cités:
**US-A- 3 434 342**
**US-A- 4 367 532**
**US-A- 4 478 089**

**WEAR,**
**vol. 31, no. 1, janvier 1975, pages 179-184, Elsevier Sequoia SA, Lausanne, CH; H.U. MITTMANN et al.: "A new device for simultaneous measurement of friction force, normal force and friction coefficient"**

(73) Titulaire: **COMMISSARIAT A L'ENERGIE ATOMIQUE, 31/33, rue de la Fédération, F-75015 Paris(FR)**

(72) Inventeur: **Lestelle, Dominique, 14, rue Couprie, F-92120 Montrouge(FR)**

(74) Mandataire: **Mongrédien, André et al, c/o BREVATOME 25, rue de Ponthieu, F-75008 Paris(FR)**

## Description

L'invention concerne un capteur de mesure d'efforts et de couples remarquable notamment par son faible encombrement et par son caractère modulaire. L'invention concerne également un palpeur et un préhenseur utilisant un ou plusieurs capteurs de ce type.

Dans des domaines techniques tels que la robotique ou la manipulation à distance, il est souvent nécessaire de connaître le torseur de contact entre deux objets solides. Cela est notamment le cas lors de la préhension d'un objet par un télémanipulateur à retour d'effort ou par un robot. La connaissance du torseur de contact est également souhaitable afin de réaliser l'insertion d'un objet dans une pièce ou lorsqu'un palpeur doit suivre le contour d'un objet avec contact.

La plupart des capteurs de mesure d'efforts et de couples existants sont des capteurs de poignet placés à l'extrémité du porteur supportant le préhenseur. Ces capteurs permettent le plus souvent de déterminer les efforts exercés selon trois axes orthogonaux et les moments des couples autour de ces trois axes. Il en existe de nombreux modèles, parmi lesquels on citera à titre d'exemple le brevet US n° 4 094 192.

Ces capteurs de poignet présentent toutefois différents inconvénients qui en limitent l'utilisation.

En premier lieu, ils présentent tous un encombrement important, notamment dans un plan orthogonal leur axe longitudinal de symétrie. Par conséquent, les dimensions de ces capteurs ne peuvent pas être réduites suffisamment pour qu'ils puissent être placés directement dans les doigts d'un préhenseur. Les cap teurs de poignet permettent donc de connaître l'interaction globale entre le préhenseur et l'objet à saisir et non le torseur de contact entre chacun des doigts du préhenseur et cet objet. Les applications de ces capteurs se trouvent ainsi limitées.

Enfin, ces capteurs de poignet sont généralement soit sensibles à la température, soit conçus de telle sorte que le découplage entre les trois forces et les trois couples mesurés est délicat et nécessite des calculs très complexes.

Par ailleurs, dans le cadre d'applications très particulières, certains capteurs de mesure d'efforts et de couples ont été conçus de façon à être placés dans les doigts d'un préhenseur. Toutefois, ces capteurs ne sont généralement sensibles aux efforts et aux couples que selon un ou deux axes et ils ne permettent jamais de connaître le torseur d'interaction complet entre chaque doigt d'un préhenseur et l'objet à saisir.

Ainsi, la demande de brevet français n° 2 520 279 décrit un dispositif permettant de déterminer une force et deux couples pour chacun des doigts du préhenseur.

Le brevet français n° 2 375 962 décrit un préhenseur à deux doigts comportant chacun trois lames situées dans des plans orthogonaux et travaillant en flexion, chaque lame étant équipée de jauges de contrainte. Toutefois, seules trois mesures sont faites sur chacun des doigts, ce qui limite en pratique les applications de ce dispositif aux mêmes cas que pour les capteurs de poignet.

La présente invention a principalement pour objet un capteur de mesure d'efforts et de couples permettant de mesurer trois forces et deux ou trois couples dans un faible volume et notamment avec un très faible encombrement dans le plan orthogonal à l'axe de symétrie du capteur, ce qui autorise notamment l'insertion d'un tel capteur directement dans le doigt d'un préhenseur.

L'invention a également pour objet un capteur de mesure d'efforts et de couples présentant un bon découplage entre les grandeurs mesurées et dont le caractère modulaire permet la réalisation de préhenseurs dans lequel chacun des doigts est équipé d'un capteur assurant à volonté le nombre de mesures souhaité.

A cet effet et conformément à l'invention, il est proposé un capteur de mesure d'efforts et de couples, caractérisé en ce qu'il comprend deux pièces en forme de U, comportant chacune deux branches de mesure reliées à leur base par une branche intermédiaire, les branches d'une même pièce passant par un plan de symétrie contenant un axe de symétrielongitudinal Z, lesdites pièces étant placées en sens inverse avec lesdits plans de symétrie de chaque pièce orthogonaux l'un par rapport à l'autre, et leurs axes de symétrie confondus, les extrémités des branches de mesure de chacune desdites pièces étant reliées à la branche intermédiaire de l'autre pièce par deux liaisons cylindriques autorisant chacune une rotation et une translation selon un même axe X,Y orthogonal à l'axe Z et parallèle audit plan de symétrie de ladite autre pièce, chacune des branches de mesure étant apte à se déformer dans ledit plan de symétrie de la pièce à laquelle cette branche appartient, des jauges de mesure de contraintes étant disposées sur ces branches de mesure de façon à mesurer les efforts exercés selon les trois directions X, Y et Z et les moments des couples autour des directions X et Y.

Selon une réalisation particulièrement avantageuse de l'invention, chacune des branches de mesure présente deux faces planes parallèles et opposées, or thogonales audit plan de symétrie de la pièce à laquelle cette branche appartient et parallèles audit axe de symétrie longitudinal Z ; les jauges de mesure de contraintes sont placées sur ces faces.

Afin de mesurer les forces exercées selon les directions X et Y, quatre jauges de mesure de contraintes sont de préférence disposées deux à deux sur les faces opposées de l'une des branches de mesure de chaque pièce. De préférence, et pour optimiser la sensibilité, elles sont placées respectivement à proximité de la base et de l'extrémité de cette branche.

De façon comparable, les efforts exercés selon la direction Z sont mesurés de préférence au moyen de deux jauges de mesure de contraintes disposées sur les faces opposées de l'une des branches de mesure de l'une des pièces et de deux autres jauges de mesure de contraintes disposées sur les faces opposées de l'une des branches de mesure de l'autre pièce.

Enfin, les moments des couples exercés autour des directions X et Y sont mesurés de préférence au moyen de quatre jauges de mesure de contraintes disposées sur les faces opposées de deux branches de mesure de chacune des pièces, sensiblement au même niveau selon l'axe Z.

De préférence, chacune des liaisons cylindriques comprend une goupille cylindrique traversant l'extrémité de l'une des branches de mesure et des oreilles formées de part et d'autre de cette extrémité sur la branche intermédiaire de la pièce en U à laquelle cette branche de mesure n'appartient pas, un organe de centrage élastique étant monté sur la goupille entre l'extrémité de la branche de mesure et chacune des oreilles.

Dans une première variante de réalisation de l'invention permettant de mesurer aussi le moment du couple autour de la direction Z, la branche intermédiaire de l'une desdites pièces supporte une pièce de préhension de façon tournante autour de l'axe Z, des moyens de rappel étant prévus pour solliciter la pièce de préhension vers une position angulaire de repos autour de l'axe Z, des moyens de mesure étant interposés entre cette pièce et la pièce de préhension pour mesurer cette rotation. Les moyens de mesure peuvent notamment être magnétiques ou optiques.

Dans une deuxième variante de réalisation de l'invention, la branche intermédiaire de l'une des pièces en U supporte rigidement une pièce flexible en torsion autour de l'axe Z, au moins une paire de jauges de contraintes étant disposée sur cette pièce travaillant en torsion.

Selon un autre aspect de l'invention, un palpeur apte à suivre le contour d'un objet par contact de cet objet avec l'extrémité d'une tige montée sur un support comporte, entre la tige et le support, un capteur réalisé de la manière définie précédemment, les pièces du capteur étant fixées respectivement par leurs branches intermédiaires sur le support et sur la tige du palpeur.

Enfin, l'invention a également pour objet un dispositif de préhension à au moins deux doigts de préhension comprenant chacun une extrémité de préhension et une base par laquelle les doigts sont montés de façon mobile sur un support, caractérisé en ce que chaque doigt de préhension comprend un capteur, lesdites pièces en forme de U de chaque capteur étant fixées respectivement par leurs branches intermédiaires sur la base et sur l'extrémité de préhension du doigt auquel il appartient.

On décrira maintenant, à titre d'exemple non limitatif, un mode de réalisation préféré de l'invention en se référant aux dessins annexés dans lesquels :

- la figure 1 est une vue en perspective, partiellement éclatée, représentant un capteur de mesure d'efforts et de couples réalisé conformément aux enseignements de l'invention ;
- la figure 2 représente le circuit électrique associé à une première série de jauges montées sur le capteur de la figure 1, des circuits semblables étant associés à chacune des cinq séries de jauges portées au total par le capteur, afin de permettre la mesure de trois forces et de deux couples ;

- la figure 3 illustre, en coupe longitudinale partielle, une variante de réalisation du capteur de la figure 1, dans laquelle un dispositif magnétique est interposé entre l'une des pièces du capteur et une pièce de préhension, afin de permettre la mesure du moment du couple autour de l'axe longitudinal Z du capteur ;
- la figure 4 est une vue en coupe selon la ligne IV-IV de la figure 3 ;
- la figure 5 représente le circuit électrique associé au dispositif magnétique de la figure 3 pour permettre la mesure du moment du couple autour de l'axe Z ;
- la figure 6 est une vue en perspective illustrant une deuxième variante de réalisation du capteur de la figure 1, dans laquelle le moment du couple autour de l'axe longitudinal Z est mesuré au moyen de jauges de contraintes placées sur une pièce flexible en torsion ; et
- la figure 7 est une vue en perspective qui illustre, à titre d'exemple nullement limitatif, l'application du capteur représenté sur la figure 1 à la réalisation d'une pince de préhension à deux doigts.

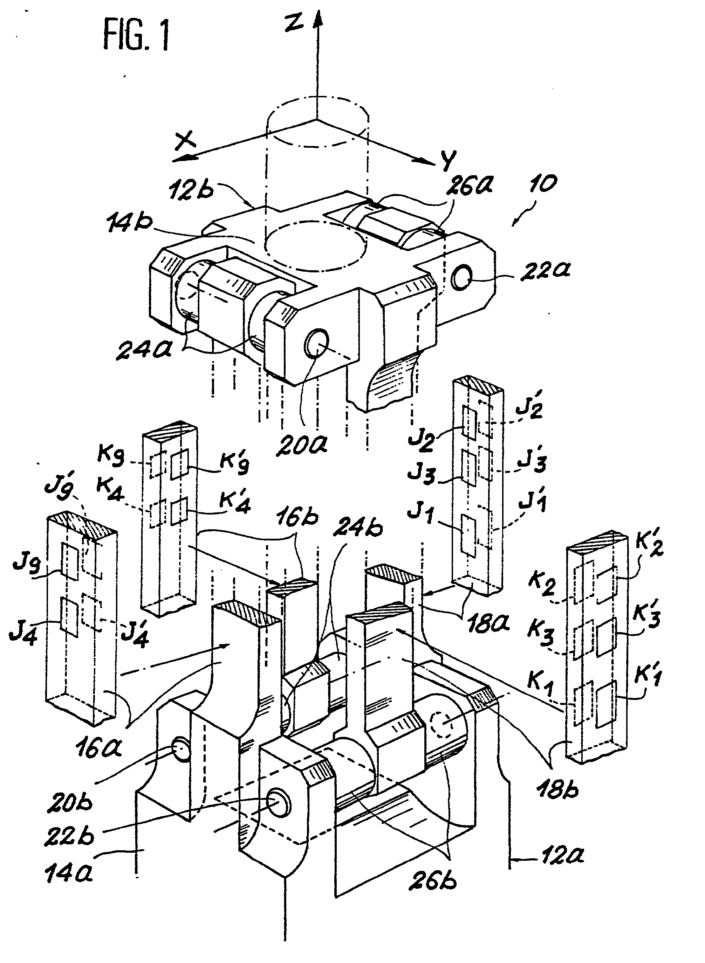

La figure 1 représente le module de base du capteur selon l'invention, qui permet de mesurer les efforts appliqués selon trois axes orthogonaux X, Y et Z, ainsi que le moment des couples autour des axes X et Y. Ce module, désigné de façon générale par la référence 10, va maintenant être décrit en détail en se référant à la figure 1.

Le module 10 comprend deux pièces 12a et 12b, monolithiques et présentant chacune approximativement la forme d'un U. Ces pièces sont de préférence identiques. Toutefois, elles peuvent aussi être légèrement différentes comme l'illustre la figure 1.

La pièce 12a comprend une branche intermédiaire 14a et deux branches de mesure parallèles 16a et 18a, reliées par leur base à la branche 14a. De même, la pièce 12b comprend une branche intermédiaire 14b et deux branches de mesure parallèles 16b et 18b reliées par leur base la branche 14b. Compte tenu de sa structure, chacune des pièces 12a et 12b présente un plan de symétrie passant par chacune des trois branches qui la constitue, ainsi qu'un axe de symétrie longitudinal.

Chacune des branches de mesure 16a, 18a et 16b, 18b présente sur la majeure partie de sa longueur une section rectangulaire uniforme. Les faces planes parallèles et opposées correspondant aux plus grands côtés de cette section rectangulaire sont orthogonales au plan de symétrie de la pièce correspondante et parallèles à l'axe de symétrie longitudinal de cette pièce.

Dans la suite du texte, on appellera face interne la face de chacune des branches de mesure tournée vers l'axe de symétrie de la pièce correspondante et face externe la face opposée de cette même branche.

Grâce à cette configuration, chacune des branches de mesure 16a, 18a et 16b, 18b se comporte, comme une poutre apte à fléchir dans le plan de symétrie de la pièce à laquelle elle appartient, tout en étant relativement rigide dans une direction orthogonale à ce plan et à l'axe de symétrie de la pièce.

Les pièces 12a et 12b sont placées en sens inverse ou tête bêche, de telle sorte que leurs axes de symétrie soient confondus et que leurs plans de symétrie définis précédemment soient orthogonaux. Par rapport aux pièces ainsi disposées, les axes X, Y et Z sont définis de telle sorte que l'axe Z corresponde à l'axe de symétrie commun aux deux pièces 12a et 12b, les axes X et Y étant perpendiculaires à l'axe Z et contenus respectivement dans le plan de symétrie de la pièce 12a et dans le plan de symétrie de la pièce 12b.

De façon plus précise les pièces 12a et 12b sont emmanchées l'une dans l'autre, de telle sorte que les extrémités des branches 16b et 18b se trouvent en face de la branche 14a et que les extrémités des branches 16a et 18a se trouvent en face de la branche 14b.

Les pièces 12a et 12b sont reliées entre elles par quatre liaisons cylindriques autorisant chacune une rotation et une translation limitées.

Deux de ces liaisons cylindriques sont réalisées au moyen de goupilles cylindriques 20a et 22a traversant respectivement les extrémités de chacune des branches 16a et 18a. Ces goupilles 20a et 22a traversent en outre des oreilles formées sur la branche intermédiaire 14b et faisant saillie de part et d'autre de l'extrémité de chacune des branches 16a et 18a. Les axes des goupilles 20a et 22a sont parallèles entre eux et s'étendent parallèlement à l'axe Y défini précédemment.

Afin de permettre une légère translation dans l'un ou l'autre sens des extrémités des branches 16a et 18a par rapport à la branche intermédiaire 14b, tout en assurant leur centrage relatif, des rondelles élastiques 24a et 26a à très faible hystérésis sont placées sur les goupilles 20a et 22a, respectivement, entre les extremités des branches 16a et 18a et les oreilles formées sur la branche 14b.

Les deux autres liaisons cylindriques sont obtenues grâce à des goupilles cylindriques 20b et 22b qui traversent respectivement les extrémités des branches 16b et 18b ainsi que les oreilles formées de part et d'autre de ces extrémités sur la branche intermédiaire 14a. Les axes de ces goupilles 20b et 22b sont parallèles entre eux ainsi qu'à l'axe X défini précédemment.

Des rondelles élastiques 24b et 26b sont également placées sur les goupilles 20b et 22b entre les extrémités des branches 16b et 18b et les oreilles formées sur la branche 14a. Un déplacement relatif entre les extrémités des branches 16b et 18b et la branche intermédiaire 14a ainsi qu'un centrage automatique de ces branches sont ainsi obtenus.

Bien entendu, les rondelles élastiques 24a, 26a et 24b, 26b pourraient être remplacées par tout autre dispositif de centrage élastique à faible hystérésis tel que des ressorts ou des rondelles métalliques.

Grâce à la structure qui vient d'être décrite, l'application d'un effort relatif parallèlement à l'axe X entre les pièces 12a et 12b a pour effet de faire fléchir selon cette direction les branches 16a et 18a de la pièce 12a, alors qu'il n'en résulte pratiquement aucune flexion des branches 16b et 18b de la pièce 12b, le décalage selon X produit entre les pièces 12a et 12b sous l'effet de la flexion des branches 16a et 18a étant compensé par les rondelles élastiques 24b et 26b.

A l'inverse, l'application d'un effort relatif selon la direction Y entre les pièces 12a et 12b a pour effet une déformation selon cette même direction des branches 16b et 18b de la pièce 12b, cette déformation étant compensée par la déformation des rondelles élastiques 24a et 26a.

L'application d'un effort selon la direction longitudinale Z entre les pièces 12a et 12b a pour effet de faire travailler simultanément en traction ou en compression chacune des branches 16a, 18a, 16b et 18b.

Lorsqu'un couple de rotation autour de l'axe X est appliqué à l'une ou l'autre des pièces 12a et 12b, cela a pour effet de faire travailler en traction l'une des branches 16b et 18b et en compression l'autre de ces branches.

De façon comparable, lorsqu'un couple de torsion est appliqué autour de l'axe Y, c'est l'une des branches 16a, 18a de la pièce 12a qui travaille en flexion alors que l'autre branche de cette même pièce travaille en compression.

Afin de mesurer les efforts selon X, Y et Z et les couples de rotation autour des axes X et Y, il suffit donc d'équiper les branches de mesure 16a, 18a, 16b et 18b des deux pièces constituant le capteur 10 de jauges permettant de mesurer les contraintes induites dans les différentes branches par ces efforts et par ces couples, tels qu'ils viennent d'être analysés.

Ainsi, pour mesurer les efforts Fx selon la direction X, on équipe l'une et l'autre des branches 16a et 18a de la pièce 12a (la branche 18a sur la figure 1) d'une première série de quatre jauges J1, J2, J'1, J'2 permettant de mesurer la flexion de cette branche. De façon plus précise, les jauges J1 et J2 sont placées sur la face interne de la branche 18a et les jauges J'1 et J'2 sont placées sur la face externe de cette même branche, les jauges J1 et J'1 étant placées à proximité de la base de cette branche alors que les jauges J2 et J'2 sont placées à proximité de son extrémité.

De façon comparable, quatre jauges K1, K2, K'1 et K'2 sont montées sur l'une des branches de mesure de la pièce 12b (la branche 18b sur la figure 1), afin de mesurer la flexion de cette branche sous l'effet d'un effort Fy selon la direction Y. Les jauges K1 et K2 sont montées sur la face interne de la branche 18b et les jauges K'1 et K'2 sur la face externe de cette même branche. Les jauges K1 et K'1 sont placées à proximité de l'extrémité de la branche 18b alors que les jauges K2 et K'2 sont proches de la base de cette branche.

Le travail en flexion résultant des efforts selon les directions X et Y entraînant des déformations surfaciques importantes, les jauges J1, J2, J'1, J'2 et K1, K2, K'1, K'2 peuvent être des jauges relativement peu sensibles telles que des jauges à trame pelliculaire.

On a vu que l'application d'un effort Fz selon Z soumet simultanément les branches de mesure des deux pièces soit à des efforts de traction, soit à des efforts de compression. Pour mesurer ces efforts, on utilise une série de quatre jauges J9, J'9, K9, K'9 disposées deux à deux sur les faces opposées de l'une des branches de mesure de la pièce 12a et sur les faces opposées de l'une des branches de mesure de la pièce 12b (il s'agit des branches 16a et 16b sur la figure 1).

De façon plus précise, les jauges J9 et J'9 sont montées respectivement sur la face externe et sur la face interne de la branche 16a, à proximité de l'extrémité de celle-ci et les jauges K9 et K'9 sont placées respectivement sur la face externe et sur la face interne de la branche 16b, à proximité de la base de celle-ci.

En outre, les axes sensibles des jauges J9 et J'9 montées sur la branche 16a sont orthogonaux aux axes sensibles des jauges K9 et K'9 montées sur la branche 16b. Ainsi, si les axes sensibles des jauges J9 et J'9 sont orientés selon Z, les axes sensibles des jauges K9 et K'9 sont orientés selon X. Inversement, si les axes sensibles des jauges J9 et J'9 sont orientés selon Y, les axes sensibles des jauges K9 et K'9 sont orientés selon Z.

L'application d'un couple de rotation autour de l'axe X ayant pour effet d'appliquer un effort de traction sur l'une des branches de mesure de la pièce 12b et un effort de compression sur l'autre branche de mesure de cette même pièce, la mesure du moment Mx de ce couple est faite au moyen d'un groupe de quatre jauges K3, K'3, K4, K'4 montées deux à deux sur chacune de ces branches. De façon plus précise, les jauges K3 et K'3 sont montées respectivement sur la face interne et sur la face externe de la branche 18b, approximativement au milieu de celle-ci, et les jauges K4 et K'4 sont montées respectivement sur la face externe et sur la face interne de la branche 16b, approximativement au milieu de celle-ci.

De façon comparable, une série de quatre jauges J3, J'3, J', J'4 sont montées sur les branches 16a et 18a de la pièce 12a pour mesurer le moment My du couple autour de l'axe Y. De façon plus précise, les jauges J3 et J'3 sont montées respectivement sur les faces interne et externe de la branche 18a, approximativement au milieu de celle-ci et les jauges J4 et J'4 sont montées respectivement sur les faces externe et interne de la branche 16a, approximativement au milieu de celle-ci.

Etant donné que les déformations des branches de mesure résultant des efforts de traction et de compression exercés sur celles-ci sont relativement faibles, les jauges J9, J'9, K'9 ; J3, J'3, J4, J'4 et K3, K'3, K4, K'4 sont de préférence des jauges présentant une bonne sensibilité telles que des jauges semi-conductrices.

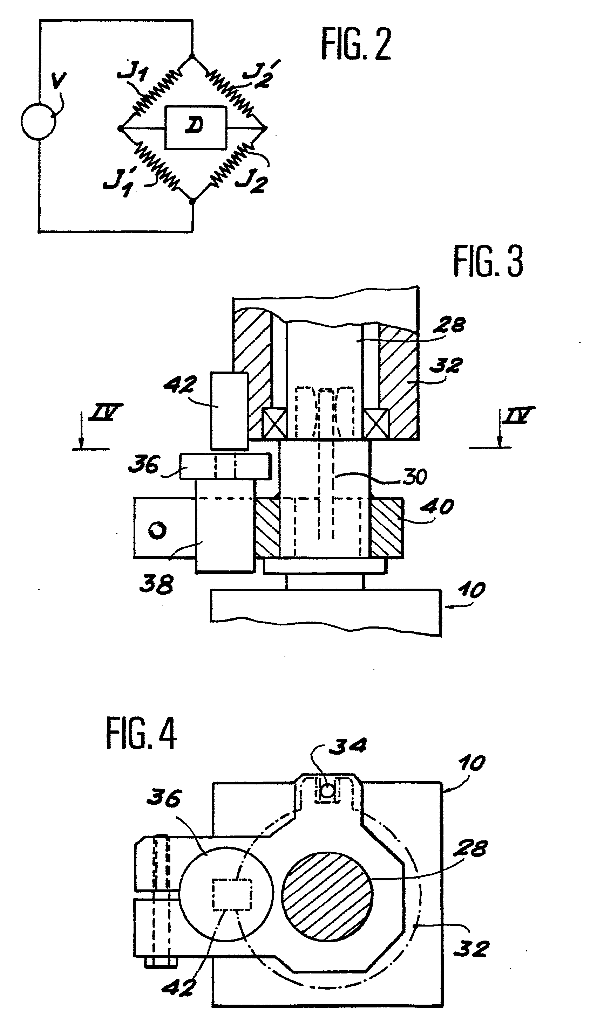

Les jauges constituant chacun des groupes de jauges permettant de mesurer les efforts Fx, Fy et Fz ainsi que les moments Mx et My des couples autour des axes X et Y sont montées dans des circuits électriques identiques dont l'un est représenté à titre d'exemple sur la figure 2.

La figure 2 représente plus précisément le circuit électrique permettant de mesurer l'effort Fx selon la direction X au moyen des jauges J1 et J2, J'1 et J'2. A cet effet, ces quatre jauges sont connectées pour former un pont de Wheastone, la jauge J1 étant connectée entre deux bornes des jauges J'1 et J'2 alors que la jauge J2 est connectée aux deux autres bornes des jauges J'1 et J'2. Une source de tension V (ou de courant I) est connectée entre la borne commune aux jauges J1 et J'2 et entre la borne commune aux jauges J2 et J'1. La tension mesurée par le dispositif D (ou respectivement le courant) entre les bornes communes aux jauges J1 et J'1 et les bornes communes aux jauges J2 et J'2 est représentative du signal Fx.

Un circuit comparable est formé avec les jauges K1, K2, K'1 et K'2 pour mesurer le signal Fy. Dans ce circuit, les jauges K'1, K2, K1 et K'2 remplacent respectivement les jauges J1, J2, J'1 et J'2 sur la figure 2.

Le circuit électrique permettant de déterminer l'effort Fz selon la direction Z est également identique au circuit représenté sur la figure 2, les jauges K9, K'9, J9 et J'9 remplaçant respectivement les jauges J1, J2, J'1 et J'2.

De même, la mesure du moment du couple My autour de l'axe Y s'effectue à l'aide d'un circuit identique à celui de la figure 2, les jauges J1, J2, J'1 et J'2 étant remplacées respectivement par les jauges J4, J'4 et J3 et J'3.

Enfin le moment Mx du couple autour de l'axe X est aussi obtenu à l'aide d'un circuit identique au circuit de la figure 2, les jauges J1, J2 et J'1 et J'2 étant remplacées respectivement par les jauges K4, K'4 et K3, K'3.

Dans le cas des mesures de couple, les jauges de mesure de contraintes sont disposées sensiblement à la même distance par rapport à l'origine du capteur.

Grâce au capteur représenté sur la figure 1 et aux circuits électriques dans lesquels sont placées les jauges de contraintes de ce capteur, on mesure ainsi les trois efforts Fx, Fy et Fz selon les directions X, Y et Z et les deux couples My et Mx selon les directions Y et X.

Conformément à un perfectionnement intéressant du capteur qui vient d'être décrit, le moment Mz du couple appliqué autour de l'axe longitudinal Z du capteur peut également être déterminé.

Une première solution, représentée sur les figures 3 à 5, va maintenant être décrite.

Sur les figures 3 et 4 on voit que le module se prolonge selon son axe longitudinal Z, sous la forme d'une tige cylindrique 28. Les pièces 12a et 12b étant identiques, la tige 28 est fixée selon le cas soit sur la branche 14a de la pièce 12a, soit sur la branche 14b de la pièce 12b. La tige 28 supporte de façon tournante, grâce à des paliers 30, une pièce de préhension 32. La position angulaire de cette pièce 32 autour de l'axe Z est déterminée au repos par un ressort de rappel 34 interposé entre cette pièce 32 et la pièce 12a ou 12b du module 10 supportant la tige 28.

Grâce à cette configuration, lorsqu'un couple de rotation relatif autour de l'axe Z est appliqué entre la pièce de préhension 32 et le module 10, il se produit une rotation dans l'un ou l'autre sens de la pièce 32 autour de l'axe Z par rapport à la position de repos déterminée par le ressort de rappel 34.

Cette rotation relative peut être mesurée à l'aide de différents moyens connus et notamment à l'aide d'un système optique ou magnétique (non représenté).

Dans le mode de réalisation représenté sur les figures 3 et 4, cette mesure est effectuée au moyen d'un système magnétique constitué par une magnéto-résistance différentielle 36 accolée à un aimant 38 monté sur un support 40 lui-même fixé sur la tige 28 à proximité immédiate du module 10. En montant sur la pièce de préhension 32 une pièce de fer doux 42 placée normalement en vis-à-vis de la magnéto-résistance 36 lorsqu'aucun couple n'est appliqué autour de l'axe Z, on peut ainsi mesurer le moment $M_Z$.

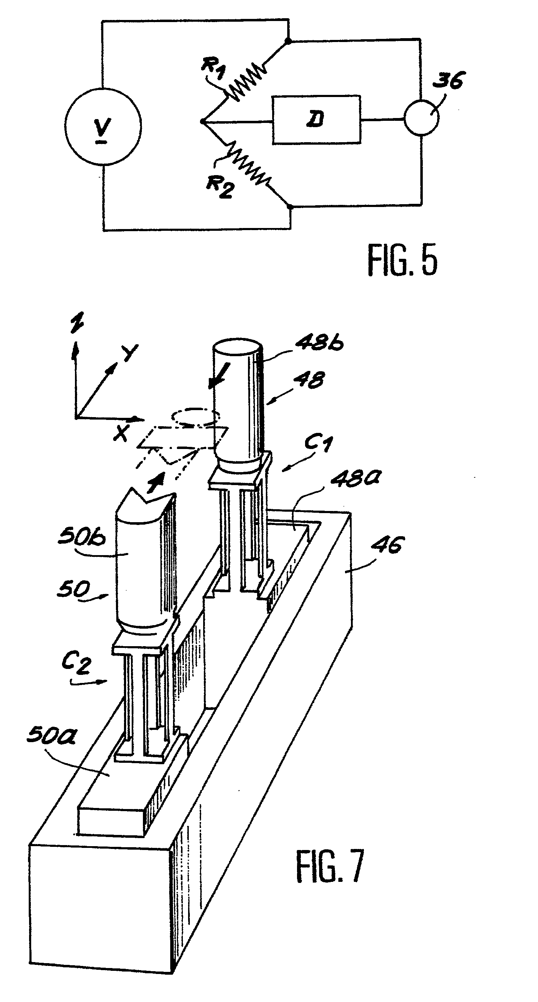

A cet effet, un circuit électrique tel que celui représenté sur la figure 5 peut être utilisé. On reconnaît sur ce circuit la magnéto-résistance 36 à laquelle sont associées deux résistances $R_1$ et $R_2$ pour former un pont de Wheastone. On applique une tension entre la borne commune à la résistance $R_1$ et à la magnéto-résistance 36 et la borne commune à la résistance $R_2$ et à la magnéto-résistance 36 au moyen d'une source de tension V (ou éventuellement de courant I pour une meilleure immunité au bruit). On peut ainsi mesurer à l'aide d'un dispositif D la tension (ou le courant respectivement) entre la magnéto-résistance 36 et la borne commune aux résistances R1 et R2, cette tension étant représentative du moment $M_Z$ du couple appliqué autour de l'axe Z.

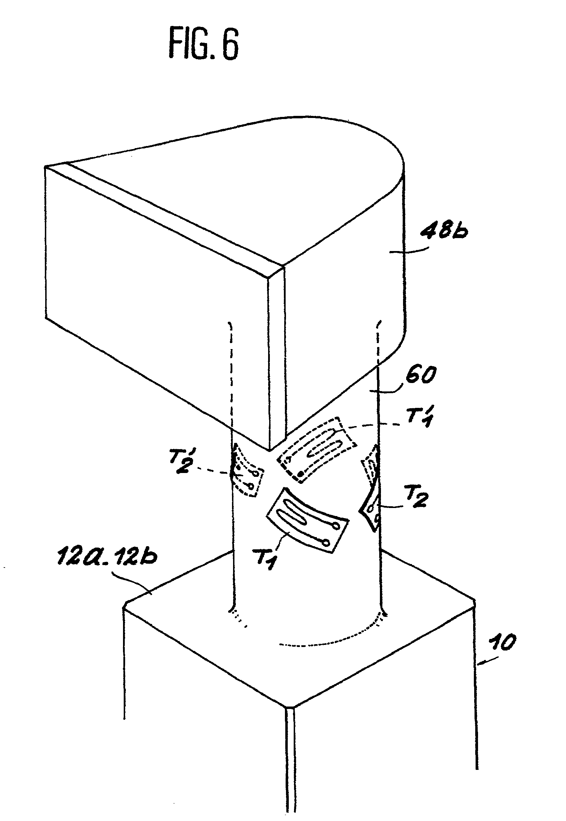

Une deuxième solution au problème de la mesure du moment $M_Z$ est représentée sur la figure 6. Dans cette solution, on intercale entre l'une des pièces 12a et 12b du module 10 et une pièce de préhension 48b une pièce métallique 60 travaillant en torsion autour de l'axe Z. En collant des jauges de contraintes sur cette pièce travaillant en torsion et en montant ces jauges dans un circuit électrique de mesure, on peut déterminer de façon en elle-même connue le moment du couple de torsion exercé sur cette pièce, c'est-à-dire le moment $M_Z$.

De façon plus précise et comme l'illustre la figure 6, quatre jauges T1, T2, T'1, T'2 sont placées au même niveau selon Z sur la pièce 60 et circonférentiellement réparties à 90° les unes des autres autour de cette pièce. Les jauges T1, T'1 d'une part et T2, T'2 d'autre part sont situées à des emplacements diamétralement opposés et orientées à 45° et en sens inverse par rapport à l'axe Z. En plaçant ces quatre jauges dans un circuit électrique comparable au circuit de la figure 2, on mesure le moment $M_Z$. En variante, seules deux jauges telles que les jauges T1, T'1 ou T2, T'2 pourraient toutefois être utilisées.

Sur la figure 7, on a représenté à titre d'exemple nullement limitatif une application utilisant deux capteurs de mesure d'efforts et de couples réalisés conformément à l'invention.

Cette application concerne un préhenseur 44 constitué essentiellement d'un support 46 sur lequel sont montés deux doigts 48 et 50. Les doigts 48 et 50 pourraient être articulés sur le support 46. Dans le mode de réalisation représenté sur la figure 6, ils restent constamment parallèles l'un à l'autre et se déplacent par coulissement sur le support 46, sous l'effet d'un dispositif de commande non représenté.

Conformément à l'invention, chacun des doigts 48 et 50 comporte, entre sa base 48a, 50a respectivement et son extrémité de préhension 48b, 50b respectivement un capteur de mesure d'efforts et de couples $C_1$, $C_2$ réalisé conformément à l'invention.

Selon que les capteurs $C_1$, $C_2$ mesurent cinq ou six grandeurs (efforts et couples) dans chacun des doigts du préhenseur, on peut obtenir au total dix, onze ou douze mesures.

Ainsi et à titre d'exemple, le capteur $C_1$ monté dans le doigt 48 peut être un capteur mesurant trois forces et deux couples tels que le module de base décrit précédemment en se référant à la figure 1. La pièce de préhension 48b constituant l'extrémité de ce doigt est alors une pièce cylindrique montée de façon à pouvoir tourner librement autour d'un axe confondu avec l'axe longitudinal du capteur 10, selon l'axe Z. Le moment du couple appliqué autour de l'axe Z est donc toujours nul et justifie l'absence de moyens servant à mesurer ce moment.

L'autre doigt 50 peut comporter au contraire un capteur $C_2$ permettant de mesurer trois forces et trois couples. Le capteur C2 est alors constitué par le module 10, équipé par exemple du dispositif à magnéto-résistance décrit précédemment en se référant aux figures 3 et 4.

L'extrémité de préhension 50b de ce doigt 50 est alors constituée par une pièce comportant par exemple une surface de préhension présentant en section dans le plan X, Y la forme d'un V, comme l'illustre la figure 6. Comme on l'a décrit précédemment en se référant aux figures 3 et 4, la pièce de préhension 50b peut pivoter légèrement autour d'un axe confondu avec l'axe longitudinal Z du capteur 10, afin de mieux s'adapter à l'objet que l'on veut saisir.

Une pince réalisée de la manière qui vient d'être décrite en se référant à la figure 7 assure la préhension d'un objet quelconque tout en permettant de connaître à chaque instant les composantes d'interaction entre cet objet et chacun des doigts de la pince.

Bien entendu, l'invention n'est pas limitée à cette application et concerne également le cas où des capteurs conformes à l'invention sont introduits dans chacun des doigts d'une pince comprenant trois doigts ou plus. Une telle pince sera utilisée pour résoudre les cas plus complexes, par exemple lorsqu'un objet doit être saisi en trois points. En plaçant dans chacun des doigts un capteur à cinq ou six degrés de liberté conforme à l'invention, les doigts ou l'ensemble de la pince peuvent alors effectuer la préhension d'un objet sans exercer de contraintes inutiles sur ce dernier résultant d'un positionnement objet-pince incorrect et sans qu'il y ait glissement de l'objet sur la surface sur laquelle il est posé.

Dans une autre application de l'invention (non représentée), un capteur constitué par le module décrit précédemment en se référant à la figure 1, éventuellement complété par la mesure du couple autour de l'axe Z de la manière décrite à titre d'exemple en se référant à la figure 3, est placé dans un palpeur destiné à suivre le pourtour d'un objet avec contact. L'une des deux pièces constituant le capteur est alors fixée par sa branche intermédiaire sur un support constitué par un dispositif porteur asservi tel qu'un robot. L'autre pièce du capteur porte également par sa branche intermédiaire une tige s'étendant selon l'axe longitudinal Z et terminée par une partie sphérique. En amenant cette partie sphérique au contact de la pièce dont on veut relever ce profil, la mesure des efforts et des couples effectuée par le capteur permet d'envoyer au dispositif porteur ou au robot des informations interprétables en consigne de changement de trajectoire ou d'orientation, afin que la sphère reste asservie à un contact avec la pièce à suivre.

L'une des utilisations d'un tel palpeur peut consister en une auto-adaptation d'un robot devant effectuer un travail sur le contour d'une pièce dont les procédés de fabrication n'autorisent pas une parfaite reproductivité d'un exemplaire à l'autre. Les consignes délivrées par le capteur peuvent par exemple être superposées à une trajectoire idéale pré-enregistrée afin de permettre son adaptation à chaque pièce sans modifier le programme type.

Ces quelques exemples d'application possibles du capteur selon l'invention font apparaître clairement les avantages essentiels présentés par ce capteur vis-à-vis des capteurs existants à ce jour.

Ainsi, le très faible encombrement présenté par ce capteur notamment dans le plan XY orthogonal à son axe de symétrie longitudinal Z permet de mesurer trois forces et, selon le cas, deux ou trois couples pour chacune des surfaces de contact d'un système de préhension. Le torseur d'interaction entre ce système de préhension et l'objet saisi peut donc être complètement connu, ce qui n'avait en pratique jamais été réalisé auparavant.

A ce faible encombrement, s'ajoute le caractère modulaire du capteur selon l'invention qui permet de réaliser pour chaque application des préhenseurs ayant le nombre de doigts voulu et le nombre de mesures nécessaire dans chacun de ces doigts.

En outre, un autre avantage important du capteur selon l'invention réside dans un bon découplage entre les grandeurs mesurées. Cette caractéristique a été vérifiée expérimentalement et s'avère particulièrement importante pour la qualité des mesures.

Enfin, il faut noter que les faibles dimensions du capteur ne sont pas obtenues au prix de la suppression des composantes continues des signaux mesurés, comme c'est le cas, par exemple, dans les dispositifs piézoélectriques dont la nature même ne permet que la détection de variations de contraintes et non celles de contraintes absolues ou permanentes.

Bien entendu, le capteur décrit précédemment à titre d'exemple peut subir différentes modifications sans sortir du cadre de l'invention. Ainsi, on a vu que les deux pièces constituant le module de base peuvent être légèrement différentes l'une de l'autre, notamment en ce qui concerne leurs branches intermédiaires. De plus, leur caractère monolithique est souhaitable mais pas impératif, les branches de mesure pouvant être fixées rigidement sur les branches intermédiaires. Enfin, les branches de mesure peuvent ne pas être parfaitement droites et parallèles entre elles et leur section peut ne pas être uniforme ni rectangulaire, pourvu que leurs déformations sous l'effet des efforts et des couples restent comparables à celles qui ont été décrites.

**Revendications**

1. Capteur de mesure d'efforts et de couples, caractérisé en ce qu'il comprend deux pièces (12a ; 12b) en forme de U, comportant chacune deux branches de mesure (16a, 18a ; 16b, 18b) reliées à leur base par une branche intermédiaire (14a ; 14b) les branches d'une même pièce passant par un plan de symétrie contenant un axe de symétrie longitudinal Z, lesdites pièces étant placées en sens inverse avec lesdits plans de symétrie de chaque pièce orthogonaux l'un par rapport à l'autre, et leurs axes de symétrie confondus, les extrémités des branches de mesure de chacune desdites pièces (12a ; 12b) étant reliées à la branche intermédiaire de l'autre pièce (12b ; 12a) par deux liaisons cylindriques (20a, 22a ; 20b, 22b) autorisant chacune une rotation et une translation selon un même axe X, Y orthogonal à l'axe Z et parallèle audit plan de symétrie de ladite autre pièce (12b ; 12a), chacune des branches de mesure étant apte à se déformer dans ledit plan de symétrie de la pièce (12a ; 12b) à laquelle cette branche appartient, des jauges de mesure de contraintes (J, K, J', K') étant disposées sur ces branches de mesure, de façon à mesurer les efforts exercés selon les trois axes X, Y et Z et les moments des couples autour des axes X et Y.

2. Capteur selon la revendication 1, caractérisé en ce que chacune des branches de mesure (16a, 18a ; 16b, 18b) présente deux faces planes parallèles et opposées, orthogonales audit plan de symétrie de la pièce (12a ; 12b) à laquelle cette branche appartient et parallèle audit axe de symétrie longitudinal Z, les jauges de mesure de contraintes (J, K, J', K') étant placées sur ces faces.

3. Capteur selon la revendication 2, caractérisé en ce que quatre jauges de mesure de contraintes (J1, J'1, J2, J'2 ; K1, K'1, K2, K'2) sont disposées deux à deux sur les faces opposées de l'une (18a ; 18b) des branches de mesure de chaque pièce (12a, 12b) respectivement à proximité de la base et de l'extrémité de cette branche, de façon à mesurer les efforts exercés selon les directions X et Y.

4. Capteur selon l'une quelconque des revendications 2 et 3, caractérisé en ce que deux jauges de mesure de contraintes (J9; J'9) sont disposées sur les faces opposées de l'une (16a) des branches de mesure de l'une (12a) des pièces, et deux jauges de mesure de contraintes (K9, K'9) sont disposées sur les faces opposées de l'une (18a) des branches de mesure de l'autre pièce (12b), de façon à mesurer les efforts exercés selon la direction Z.

5. Capteur selon l'une quelconque des revendications 2 à 4, caractérisé en ce que quatre jauges de mesure de contraintes (K3, K'3, K4, K'4 ; J3, J'3, J4, J'4) sont disposées sur les faces opposées des deux branches de mesure de chacune des pièces (12b ; 12a) sensiblement au même niveau selon l'axe Z, de façon à mesurer les moments des couples exercés autour des directions X et Y.

6. Capteur selon l'une quelconque des revendications 1 5, caractérisé en ce que chacune des liaisons cylindriques comprend une goupille cylindrique (20a, 22a ; 20b, 22b) traversant l'extrémité de l'une des branches de mesure et des oreilles formées de part et d'autre de cette extrémité sur la branche intermédiaire de la pièce en forme de U à laquelle cette branche de mesure n'appartient pas, un organe de centrage élastique (24a, 26a ; 24b, 26b) étant monté sur la goupille entre l'extrémité de la branche de mesure et chacune des oreilles.

7. Capteur selon l'une quelconque des revendications 1 à 6, caractérisé en ce que la branche intermédiaire de l'une desdites pièces (12a, 12b) supporte une pièce de préhension (32) de façon tournante autour de l'axe Z, des moyens de rappel (34) étant prévus pour solliciter la pièce de préhension vers une position angulaire de repos autour de l'axe Z, des moyens de mesure (36, 42) étant interposés entre cette pièce (12a, 12b) et la pièce de préhension (32), pour mesurer un décalage angulaire par rapport à ladite position angulaire de repos.

8. Capteur selon la revendication 7, caractérisé en ce que les moyens de mesure sont un dispositif magnétique (36, 42).

9. Capteur selon la revendication 7, caractérisé en ce que les moyens de mesure sont un dispositif optique.

10. Capteur selon l'une quelconque des revendications 1 à 6, caractérisé en ce que l'une desdites pièces (12a, 12b) supporte rigidement une pièce (60) flexible en torsion autour de l'axe Z, au moins une paire de jauges de contraintes (T1, T'1, T2, T'2) étant disposée sur cette pièce flexible en torsion.

11. Palpeur apte à suivre le contour d'un objet par contact de cet objet avec l'extrémité d'une tige montée sur un support, caractérisé en ce que ladite tige est montée sur le support par l'intermédiaire d'un capteur (10) selon l'une quelconque des revendications précédentes, lesdites pièces (12a, 12b) du capteur étant fixées respectivement par leurs branches intermédiaires sur le support et sur la tige du palpeur.

12. Dispositif de préhension à au moins deux doigts de préhension comprenant chacun une extrémité de préhension et une base par laquelle les doigts sont montés de façon mobile sur un support, caractérisé en ce que chaque doigt de préhension comprend un capteur (10) selon l'une quelconque des revendications 1 à 10, lesdites pièces en forme de U (12a, 12b) de chaque cap teur étant fixées respectivement par leurs branches intermédiaires sur la base et sur l'extrémité de préhension du doigt auquel il appartient.

**Claims**

1. Pickup for measuring forces and torques, characterized in that it comprises two U-shaped parts (12a, 12b), each having two measuring branches (16a, 18a; 16b, 18b) connected at their base by an intermediate branch (14a, 14b), the branches of the same part passing through a plane of symmetry containing a longitudinal axis of symmetry Z, said parts being placed in reverse direction with said planes of symmetry of each part which are orthogonal with respect to one another, whilst their axes of symmetry coincide, the ends of the measuring branches of each of said parts (12a, 12b) being connected to the intermediate branch of the other part (12b, 12a) by two cylindrical links (20a, 22a; 20b, 22b) each authorizing a rotation and a translation along the same axis X, Y orthogonal to the axis Z and parallel to the plane of symmetry of said other part (12b, 12a), each of the measuring branches being able to deform in said plane of symmetry of the part (12a, 12b) to which said branch belongs, strain gauges (J, K, J', K') being placed on these measuring branches so as to measure the forces exerted in three directions X, Y and Z and the moments of the torques about directions X and Y.

2. Pickup according to claim 1, characterized in that each of the measuring branches (16a, 18a; 16b, 18b) has two parallel, opposite, planar faces orthogonal to the plane of symmetry of the part (12a, 12b) to which said branch belongs and parallel to the longitudinal axis of symmetry Z, the strain gauges (J, K, J', K') being placed on these faces.

3. Pickup according to claim 2, characterized in that four strain gauges (J1, J'1, J2, J'2; K1, K'1, K2, K'2) are arranged in pairs on the opposite faces of one (18a, 18b) of the measuring branches of each part (12a, 12b) respectively in the vicinity of the base and the end of said branch, so as to measure the forces exerted in directions X and Y.

4. Pickup according to either of the claims 2 and 3, characterized in that two strain gauges (J9, J'9) are located on the opposite faces of one (16a) of the measuring branches of one (12a) of the parts and two strain gauges (K9, K'9) are placed on the opposite faces of one (18a) of the measuring branches of the other part (12b), so as to measure the forces exerted in direction Z.

5. Pickup according to any one of the claims 2 to 4, characterized in that four strain gauges (K3, K'3, K4, K'4; J3, J'3, J4, J'4) are placed on the opposite faces of two measuring branches of each of the parts (12b, 12a) substantially at the same level along axis Z, so as to measure the moments of the torques exerted about directions X and Y.

6. Pickup according to any one of the claims 1 to 5, characterized in that each of the cylindrical links comprises a cylindrical pin (20a, 22a; 20b, 22b) traversing the end of one of the measuring branches and lugs formed on either side of said end on the intermediate branch of the U-shaped part to which said measuring branch does not belong, an elastic centring member (24a, 26a; 24b, 26b) being mounted on the pin between the end of the measuring branch and each of the lugs.

7. Pickup according to any one of the claims 1 to 6, characterized in that the intermediate branch of one of the parts (12a, 12b) supports a gripper (32) so as to rotate about axis Z, return or restoring means (34) being provided in order to draw the gripper towards an angular inoperative position about axis Z, measuring means (36, 42) being interposed between said part (12a, 12b) and the gripper (32) for measuring an angular displacement with respect to said angular inoperative position.

8. Pickup according to claim 7, characterized in that the measuring means are a magnetic device (36, 42).

9. Pickup according to claim 7, characterized in that the measuring means are an optical device.

10. Pickup according to any one of the claims 1 to 6, characterized in that one of said parts (12a, 12b) rigidly supports a member (60) which is flexible in torsion about axis Z, at least one pair of strain gauges (T1, T'1, T2, T'2) being positioned on said member which is flexible in torsion.

11. Follower able to follow the contour of an object by contact thereof with the end of a rod mounted on a support, characterized in that said rod is mounted on the support by means of a pickup (10) according to any one of the preceding claims, said parts (12a, 12b) of the pickup being respectively fixed by their intermediate branches to the support and to the rod of the follower.

12. Gripper with at least two gripping fingers, each having a gripping end and a base by which the fingers are mounted in mobile manner on a support, characterized in that each gripping finger comprises a pickup (10) according to any one of the claims 1 to 10, said U-shaped parts (12a, 12b) of each pickup being respectively fixed by their intermediate branches to the base and to the gripping end of the finger to which it belongs.

**Patentansprüche**

1. Meßvorrichtung von Kräften und Momenten, dadurch gekennzeichnet, daß sie zwei Teile (12a; 12b) in U-Form aufweist, die jeweils zwei Meßschenkel (16a, 18a; 16b, 18b) aufweisen, die an ihrer Basis durch einen Zwischenschenkel (14a; 14b) verbunden sind, wobei die Schenkel eines selben Teils durch eine Symmetrieebene hindurchgehen, die eine Längssymmetrieachse Z enthält, wobei die genannten Teile in umgekehrter Richtung bezüglich der genannten Symmetrieebene eines jeden Teils angeordnet sind, die senkrecht aufeinander stehen und deren Symmetrieachsen zusammenfallen, wobei die Enden der Meßschenkel eines jeden der genannten Teile (12a; 12b) mit dem Zwischenschenkel des anderen Teils (12b; 12a) durch zwei zylindrische Verbindungen (20a, 22a; 20b, 22b) verbunden und, die jedem eine Drehung und Translation entlang einer selben Achse X, Y, senkrecht zur Achse Z und parallel zur Symmetrieebene des anderen Teils (12b; 12a), erlauben, wobei jeder der Meßschenkel geeignet ist, sich in der genannten Symmetrieebene des Teils (12a; 12b), zu dem der Schenkel gehört, zu deformieren, wobei Dehnungsmesser (J, K, J', K') auf den Meßschenkeln angeordnet sind, derart, daß sie die entlang der drei Achsen X, Y und Z wirkenden Kräfte und die Drehmomente um die Achsen X und Y messen.

2. Meßvorrichtung nach Anspruch 1, dadurch gekennzeichnet, daß jeder der Meßschenkel (16a, 18a; 16b, 18b) zwei parallele und einander gegenüberliegende ebene Seiten aufweist, die senkrecht zur Symmetrieebene des Teils (12a; 12b) sind, zu dem dieser Schenkel gehört und parallel ist zur Längssymmetrieachse Z, wobei die Dehnungsmesser (J, K, J', K') an den Seiten angeordnet sind.

3. Meßvorrichtung nach Anspruch 2, dadurch gekennzeichnet, daß vier Dehnungsmesser (J1, J'1, J2, J'2; K1, K'1, K2, K'2) paarweise an den einander gegenüberliegenden Seiten des einen (18a; 18b) der Meßschenkel eines jeden Teiles (12a, 12b) in der Nähe der Basis bzw. des Endes dieses Schenkels angeordnet sind, derart, daß sie die entlang der Richtung X und Y wirkenden Kräfte messen.

4. Meßvorrichtung nach Anspruch 2 oder 3, dadurch gekennzeichnet, daß zwei Dehnungsmesser (J9; J'9) an gegenüberliegenden Seiten des einen (16a) der Meßschenkel des einen (12a) der Teile angeordnet sind, und zwei Dehnungsmesser (K9, K'9) an den einander gegenüberliegenden Seiten des einen (18a) der Meßschenkel des anderen Teils (12b) derart angeordnet sind, um die entlang der Richtung Z wirkenden Kräfte zu messen.

5. Meßvorrichtung nach einem der Ansprüche 2 bis 4, dadurch gekennzeichnet, dar vier Dehnungsmesser (K3, K'3, K4, K'4; J3, J'3, J4, J'4) an den gegenüberliegenden Seiten der beiden Meßschenkel eines jeden der Teile (12b; 12a) im wesentlichen auf derselben Höhe entlang der Achse Z derart angeordnet sind, um die Drehmomente zu messen, die um die Richtung X und Y aufgebracht werden.

6. Meßvorrichtung nach einem der Ansprüche 1 bis 5, dadurch gekennzeichnet, daß jede der zylindrischen Verbindungen einen zylindrischen Stift (20a, 22a; 20b, 22b) aufweist, der das Ende des einen der Meßschenkel und die Ösen durchsetzt, die einerseits und andererseits dieses Endes auf dem Zwischenschenkel des Teils in U-Form gebildet sind, zu dem dieser Meßschenkel nicht gehört, wobei ein elastisches Zentrierorgan (24a, 26a; 24b, 26b) auf dem Stift zwischen dem Ende des Meßschenkels und jeder Öse angeordnet ist.

7. Meßvorrichtung nach einem der Ansprüche 1 bis 6, dadurch gekennzeichnet, daß der Zwischenschenkel des einen der Teile (12a, 12b) ein Greiferteil (32) in um die Achse Z drehender Weise trägt, wobei Rückführeinrichtungen (34) vorgesehen sind, um das Greiferteil in eine Ruhe-Winkelstellung um die Achse Z zu bringen, wobei Meßeinrichtungen (36, 42) zwischen diesem Teil (12a, 12b) und dem Greiferteil (32) angeordnet sind, um die Winkelversetzung bezüglich der Ruhe-Winkelstellung zu messen.

8. Meßvorrichtung nach Anspruch 7, dadurch gekennzeichnet, daß die Meßeinrichtungen eine Magnetvorrichtung (36, 42) sind.

g. Meßvorrichtung nach Anspruch 7, dadurch gekennzeichnet, daß die Meßeinrichtungen eine optische Vorrichtung sind.

10. Meßvorrichtung nach einem der Ansprüche 1 bis 6, dadurch gekennzeichnet, daß eines der Teile (12a, 12b) steif ein torsionsflexibles Teil (60) um die Achse Z trägt, wobei wenigstens ein Paar von Dehnungsmessern (T1, T'1, T2, T'2) auf diesem torsionsflexiblen Teil angeordnet ist.

11. Fühler, der geeignet ist, der Kontur eines Objektes durch Kontakt mit diesem zu folgen, mit dem Ende eines auf einer Stütze angeordneten Fingers, dadurch gekennzeichnet, daß die Stange auf der Stütze über eine Meßvorrichtung (10) nach einem der vorhergehenden Ansprüche angeordnet ist, wobei die genannten Teile (12a, 12b) der Meßvorrichtung durch ihre Zwischenschenkel auf der Stütze bzw. auf der Stange des Fühlers festgelegt sind.

12. Greifervorrichtung mit wenigstens zwei Greiferfingern, die jeweils ein Greiferende und eine Basis aufweisen, durch die die Finger beweglich auf der Stütze angeordnet sind, dadurch gekennzeichnet, daß ihre Greiferfinger eine Meßvorrichtung (10) nach einem der Ansprüche 1 bis 10 aufweisen, wobei die genannten Teile in U-Form (12a, 12b) einer jeden Meßvorrichtung mit ihren Zwischenschenkeln an der Basis bzw. auf dem Greiferfingerende, zu dem sie gehören, festgelegt sind.

FIG. 1

FIG. 2

FIG. 3

FIG. 4

FIG. 5

FIG. 7

# FIG. 6